(19) **Europäisches Patentamt** **European Patent Office** **Office européen des brevets**

(11) **EP 4 765 715 A1**

(12) **EUROPEAN PATENT APPLICATION**

(43) Date of publication:
**24.06.2026 Bulletin 2026/26**

(21) Application number: **24222318.8**

(22) Date of filing: **20.12.2024**

(51) International Patent Classification (IPC):
*H04L 9/00* (2022.01)      *H04L 9/08* (2006.01)
*H04L 9/32* (2006.01)      *H04L 9/40* (2022.01)

(52) Cooperative Patent Classification (CPC):
**H04L 9/50; H04L 9/0897; H04L 9/3247;
H04L 63/104**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Johansson, Viktor
0194 Oslo (NO)**

(72) Inventor: **Johansson, Viktor
0194 Oslo (NO)**

(74) Representative: **Valvoda, Jakob
Boehmert & Boehmert
Anwaltspartnerschaft mbB
Pettenkoferstrasse 22
80336 München (DE)**

(54) **BLOCKCHAIN-BASED USER ACCOUNTS**

(57)     Improvements of blockchain-based user accounts in terms of user security and control are presented. For instance, there is provided a computer-implemented method comprising providing a blockchain-based user account for a user, wherein the user account is associated with a first private key for performing a user operation on a blockchain network, the first private key maintained on a device associated with the user, and wherein the user account is further associated with a second private key and a third private key for collaboratively configuring one or more execution conditions for the user operation, the second private key maintained on the first device and the third private key maintained on a second device, wherein the first device and the second device are devices associated with the user. A corresponding system including at least the first device and the second device and a corresponding method performed at a validator node are also provided.

Fig. 1

## Description

TECHNICAL FIELD

The present disclosure relates to a blockchain-based user account system and related methods, system, device and media. In particular, the present disclosure may relate to an improved blockchain-based user account and an improved blockchain-based user account system.

BACKGROUND

In the field of blockchain technology, it is common for users to manage their resources like digital assets or tokens through blockchain-based user accounts. These accounts are typically secured using cryptographic private keys to generate digital signatures verifiable with corresponding public keys, thereby offering a robust protection against falsification by conventional computers and ensuring the authenticity of authorizations.

However, the security of blockchain-based user accounts, and specifically of associated private keys, remains a significant concern. If these latter get tampered with or simply lost, users may suffer severe loss and harm, not only temporarily but also permanently as private keys are hardly retrievable. Adopting a custodial approach letting private keys be managed by a trusted third party, like a trusted remote access or service provider, may dramatically help preventing theft but makes users greatly dependent of the trusted third party since full access control to the users' accounts remains by the trusted third party. Various methods have been proposed to mitigate risks, such as hardware wallets for offline secure signing, duel-key schemes with a master-slave setup, or mnemonic seed phrases, offering ways to provide backup. However, these solutions often come with their own set of challenges in terms of usability and practicability.

Furthermore, even if secure storage of private keys is ensured, users are still vulnerable to sophisticated fraud techniques such as phishing attacks, social engineering, and malware. These methods can trick users into revealing their private keys or signing malicious transactions. As a result, securing the private key alone is often not sufficient to fully protect users against fraudsters.

There is therefore a need for technical solutions to enhance the security of blockchain-based accounts by efficiently protect users against tampering without compromising on practicability.

SUMMARY

It is an object of this invention to provide an improved blockchain-based user account system and related methods, system, device and media to overcome the above-described disadvantages.

A first aspect of the invention provides a computer-implemented method, the method comprising: providing a blockchain-based user account for a user, wherein the user account is associated with a first private key for performing a user operation on a blockchain network, the first private key maintained on a device associated with the user, and wherein the user account is further associated with a second private key and a third private key for collaboratively configuring one or more execution conditions for the user operation, the second private key maintained on a first device and the third private key maintained on a second device, wherein the first device and the second device are devices associated with the user.. According to this first aspect, the provided blockchain-based user account combines a self-custody approach with a dual-key controlled scheme maintaining and applying restrictions or permissions to user operations.

The first, second and third private keys are for instance private keys of respective asymmetric key pairs. In a particularly preferred embodiment, the device that maintains the first private key is one of the first device or the second device. However, in another embodiment, the device that maintains the first private key may be a user device other than the first device and the second device.

In an implementation of the method according to the first aspect, the second private key and third private key may be used to configure the one or more execution conditions according to a proposal - approval scheme using the first device and the second device. For instance, the first private key may be used for signing a user operation request sent to the blockchain network, the second private key may be used for signing a configuration proposal of the one or more execution conditions sent by the first device to the blockchain network and the third private key may be used for signing a configuration approval of the configuration proposal sent by the second device to the blockchain network. This scheme achieves a dynamic interaction between the two devices and the user, thereby improving account security.

In a preferred implementation of the method according to the first aspect, the user account comprises an operator account and the first private key is associated with an operation manager operating the operator account. For instance, the operator account may be a blockchain account of the blockchain network. The operation manager may execute on the device that maintains the first private key. The method may further include obtaining, by the device that maintains the first private key, a user operation request for the user operation. The operation manager may determine whether the one or more execution conditions are met by the user operation requested in the user operation request. When the conditions are met, the operation manager may operate the operator account to send the user operation request signed using the first private key to the blockchain network. When the conditions are not met, the operation manager may dismiss the user operation request. Accordingly, a first enforcement scheme of the one or more execution conditions is implemented on the device that maintains the first private key associated with the operator account.

In a first embodiment of the preferred implementation of the method according to the first aspect, the one or more execution conditions may comprise at least one of: one or more execution conditions defined by one or more resource receiver parameters, one or more execution conditions defined by one or more resource transfer parameters, and/or one or more execution conditions defined by one or more temporal parameters.

In the first embodiment of the preferred implementation of the method according to the first aspect, the one or more resource receiver parameters may comprise identification data of one or more authorized resource receivers. For instance, the identification data of the one or more authorized resource receivers are based at least in part on a list of authorized resource receivers provided by one or more trusted authorization providers and/or a user selection of at least some of the one or more authorized resource receivers. In this case, the one or more execution conditions defined by the one or more resource receiver parameters may be particularly met by the user operation when a resource receiver indicated in the user operation is an authorized resource receiver identifiable in the identification data of one or more authorized resource receivers. This restriction avoids that resources may be transferred by a fraudster to an unallowed resource receiver, thereby enhancing account protection.

In the first embodiment of the further implementation of the method according to the first aspect, the one or more resource transfer parameters may comprise a resource transfer limit defining an authorized maximum resource transfer amount for the user operation. Accordingly, the one or more execution conditions defined by the one or more resource transfer parameters may be met by the user operation when a resource transfer amount in the user operation is below or equal to the resource transfer limit.

In the first embodiment of the further implementation of the method according to the first aspect, the one or more temporal parameters may comprise a time-based resource flow limit defining an authorized maximum amount of resource transferable over a predefined time period. In that case, the one or more execution conditions defined by the one or more temporal parameters may be met by the user operation request when a sum of a resource transfer amount in the user operation and resource transfer amounts of past user operations performed over the predefined time period using the user account is below or equal to the time-based resource flow limit.

According to any implementation of the first aspect, the method may comprise providing an operation profile associated with the user account and configurable by the user using collaboratively the second private key and the third private key. For instance, the operation profile of the user account may be stored on the blockchain network and may be accessible at least by the device that maintains the first private key. In some examples, the operation profile may be based on a template operation profile that is customizable by the user.

In a particular implementation according to the first aspect, the second private key may be associated with a proposer agent executing on the first device and the third private key may be associated with an approver agent executing on the second device. The proposer agent may be configured to submit a configuration proposal of one or more execution conditions to the blockchain network, signed by the second private key, and the approver agent may be configured to submit a configuration approval or a configuration refusal of the configuration proposal signed by the third private key to the blockchain network.

Accordingly, the method may comprise configuring the one or more execution conditions using the first device and the second device, the configuring comprising: obtaining, by the first device and based on a user input, a configuration request of the one or more execution conditions; submitting, by the proposer agent, the configuration proposal corresponding to the configuration request to the blockchain network, the configuration proposal being signed by the second private key; authenticating, by the blockchain network, the configuration proposal and recording, by the blockchain network, the configuration proposal on the blockchain; receiving, by the second device, a message about the configuration proposal as recorded on the blockchain and prompting, by the second device, the user to verify and approve the configuration proposal; upon receipt of a user approval instruction of the configuration proposal on the second device, submitting, by the approver agent, the configuration approval of the configuration proposal signed by the third private key to the blockchain network; upon receipt of a user refusal instruction of the configuration proposal, submitting, by the approver agent, the configuration refusal of the configuration proposal signed by the third private key to the blockchain network; authenticating, by the blockchain network, the configuration approval or the configuration refusal obtained from the second device; when the configuration approval is obtained from the second device, recording, by the blockchain network, a configuration of the one or more execution conditions corresponding to the configuration request on the blockchain; and when the configuration refusal is obtained from the second device, refusing, by the blockchain network, the configuration request and recording the refusal on the blockchain.

In said particular implementation according to the first aspect, the second private key may be associated with a proposer blockchain account of the user account and the third private key may be associated with an approver blockchain account of the user account.

Moreover, in a first embodiment of the particular implementation according to the first aspect, the proposer agent and the approver agent may belong to an administrator layer of the user account.

Further, in an implementation of interest according to the first aspect, the method may further comprise: receiving, by a validator node of the blockchain network, the user operation request; authenticating, by the validator node, the user operation request signed using the first private key; verifying, by the validator node, that the one or more execution conditions are met by the user operation; proceeding, by the validator node, with expediting the user operation request when the verification succeeds; and refusing, by the validator node, the user operation request when the verification fails and recording the refusal on the blockchain. Accordingly, a second enforcement scheme of the one or more execution conditions is implemented on the validator node, thereby achieving a dual-step verification and/or authentication scheme and preventing from execution of fraudulent user operations issued by hacked operator accounts.

In the implementation of interest according to the first aspect, the operator account may be a local operator account of the user account, the local operator account configured to operate on the blockchain network, proceeding, by the validator node, with expediting the user operation request when the verification succeeds comprises: submitting and recording, by the validator node, a blockchain transaction corresponding to the user operation on the blockchain of the blockchain network.

In another embodiment of the implementation of interest according to the first aspect, the operator account may be a commissioned operator account of the user account, wherein the commissioned operator account is configured to initiate a user operation targeted to a receiver outside the blockchain network. For instance, it may be configured to operate on an external blockchain network other than the blockchain network and the user operation request may be a request for an external user operation on the external blockchain network, wherein the first private key and a fourth private key are associated with the commissioned operator account, the fourth private key operated by a trusted agent on a secure environment, wherein the trusted agent is configured to sign the external user operation using the fourth private key in collaboration with the operation manager using the first private key according to a dual-key signature scheme.

In the other embodiment of the implementation of interest according to the first aspect, proceeding, by the validator node, with processing the user operation request when the verification succeeds may comprise: issuing, by the blockchain network, a signing instruction of the external user operation to the trusted agent for the trusted agent to perform a first step of a dual-key signature on the external user operation using the fourth private key and obtain a partial-signature of the external user operation; receiving, by the blockchain network, the partial-signature of the external user operation from the trusted agent and recording, by the blockchain network, the partial-signature on the blockchain; and obtaining, by the operation manager, the partial-signature from the blockchain, performing, by the operation manager, a second step of the dual-key signature of the external user operation using the partial-signature and the first private key to obtain a dual-key signature and submitting the external user operation with the dual-key signature to the external blockchain network for processing.

In said other embodiment of the implementation of interest according to the first aspect, the operation manager and the trusted agent may be configured to collaboratively generate the dual-key signature on the external user operation, wherein the dual-key signature may authenticate the external user operation before the external blockchain network and may be verifiable using a corresponding single public key.

In any embodiment of the implementation of interest according to the first aspect, the local operator account or the commissioned operator account may belong to an operator layer of the user account.

In an implementation according to the first aspect, the operation profile may be a profile for all operator accounts of the user account or specific for the local operator account or specific for the commissioned operator account. The user account may also comprise one or more local operator accounts and/or one or more commissioned operator accounts. Typically, all operator accounts are subject to associated one or more execution conditions of the user account. For instance, any operator account may have own respective execution conditions, be associated with particular execution conditions applicable to a particular group of operator accounts, or be subject to execution conditions applicable to all operator accounts. This is configurable by the user using the configuration process explained above.

In an implementation according to the first aspect, the user account and the blockchain network may be operated in accordance with a system defined protocol. The system defined protocol may rule some security measures to be implemented by validator nodes of the blockchain network but also by any user device enabling interaction with one or more blockchain-based user accounts, such as the first device and the second device.

In the first embodiment of the particular implementation of the method according to the first aspect, providing the blockchain-based user account for the user may comprise establishing an administrator layer of the user account, the establishing including: establishing the proposer agent on the first device, the proposer agent associated with the second private key and with a corresponding first blockchain address on the blockchain network; establishing the approver agent on the second device, the approver agent associated with the third private key and with a corresponding second blockchain address on the blockchain network; receiving, by the proposer agent, the second blockchain address of the approver agent; submitting, by the proposer agent, an administrator layer establishment request to a the blockchain network to establish the administrator layer based on the proposer agent and the approver agent, the request comprising the second blockchain address and a representation of the first blockchain address; recording, by the blockchain network, the administrator layer establishment request as a candidate administrator layer on the blockchain of the blockchain network; receiving, by the second device, a message about the candidate administrator layer from the blockchain network and prompting the user to verify and approve an establishment of the candidate administrator layer; upon user approval, submitting, by the second device, an approval of the establishment of the candidate administrator layer to the blockchain network; and establishing, by the blockchain network, the administrator layer of the user account, and recording the administrator layer on the blockchain. In this first embodiment, the second blockchain address of the approver agent may be received by the proposer agent as part of an exchange of agent blockchain addresses conducted between the first device and the second device.

Additionally, in this first embodiment of the particular implementation of the method according to the first aspect, the device that maintains the first private key is the first device and providing the blockchain-based user account for a user may comprise establishing an operator account of the user account and the operation profile, the establishing comprising: establishing an operation manager to operate the operator account on the first device, wherein the first private key is associated with the operation manager and a public key of the operation manager corresponds to a public key corresponding to the first private key; submitting, by the proposer agent, an operation profile establishment request for the operator account to the blockchain network, the request including a specification of the operation profile; recording, by the blockchain network, the operation profile establishment request as a candidate operation profile on the blockchain; receiving, by the second device, a message about the candidate operation profile and prompting, by the second device, the user to verify and approve the candidate operation profile; upon a user approval of the candidate operation profile received on the second device, sending, by the approval agent, an approval of the candidate operation profile to the blockchain network; and upon receipt of the approval of the candidate operation profile from the approval agent, establishing, by the blockchain network, the operation profile in the user account, the operation profile being associated with the operator account and recording the operation profile on the blockchain.

A second aspect of the invention provides a system comprising at least: a first device associated with a user; a second device associated with the user; wherein a user account is associated with a first private key for performing a user operation on a blockchain network, the first private key maintained on a device associated with the user, and wherein the user account is further associated with a second private key and a third private key for collaboratively configuring one or more execution conditions for the user operation, the second private key maintained on the first device and the third private key maintained on the second device. Preferably, the blockchain-based user account for the user can be associated with the first device and the second device.

In a particularly preferred embodiment of the second aspect, the device that maintains the first private key is one of the first device or the second device. However, in another embodiment, the device that maintains the first private key may be a user device other than the first device and the second device.

Preferably, the system according to the second aspect of the invention may be configured to perform any of the implementations of the method according to the first aspect. Details and implementations provided above with the first aspect will not be repeated.

A third aspect of the invention provides a computer-implemented method comprising: receiving, by a validator node of a blockchain network, a user operation request from an operation manager executing on a device associated with a user and that maintains a first private key, wherein the operation manager is associated with a blockchain-based user account for the user, the first private key is a first private key of the user account, wherein the user operation request is signed by the operation manager using the first private key and the user operation request is a request for performing a user operation on the blockchain network, wherein the user account is further associated with a second private key and a third private key for collaboratively configuring one or more execution conditions for the user operation, the second private key maintained on a first device and the third private key maintained on a second device, wherein the first device and the second device are devices associated with the user, the method comprising: authenticating, by the validator node, the user operation request; and processing, by the validator node, the user operation request.

In a particularly preferred embodiment of the third aspect, the device that maintains the first private key is one of the first device or the second device. However, in another embodiment, the device that maintains the first private key may be a user device other than the first device and the second device.

In a first implementation of the method according to the third aspect, processing, by the validator node, the user operation request may comprise: verifying, by the validator node, that the one or more execution conditions are met by the user operation requested in the user operation request; proceeding, by the validator node, with processing the user operation request when the verification succeeds; and refusing, by the validator node, the user operation request when the verification fails and recording the refusal on the blockchain.

A fourth aspect of the invention provides a node device on a blockchain network, the node device configured to carry out the method of any of the implementations of the method according to the third aspect.

A fifth aspect of the invention one or more computer-readable media storing instructions that, when executed by one or more computing devices, configure at least one of the computing devices to perform a method according to any implementations of the first aspect or the third aspect.

## BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.

Fig. 1: a schematic block diagram illustrating an embodiment of a blockchain-based user account system involving multiple user devices and private keys for configuring execution conditions.

Fig. 2: shows a schematic flowchart of a method for establishing an administrator layer of a user account on a blockchain network.

Fig. 3: shows a schematic flowchart of a method for establishing an operation profile associated with an operator account on a blockchain network.

Fig. 4: shows a schematic flowchart of a method for configuring one or more execution conditions using the first device and the second device.

Fig. 5: shows a schematic flowchart of a method for processing a user operation request at a validator node in a blockchain network.

Fig. 6: shows a schematic block diagram of a system comprising user devices, a secure environment, and a blockchain network, illustrating the interaction of various components and keys within a blockchain-based user account system.

Fig. 7: shows a schematic flowchart of a method for performing a dual-key signature of an external user operation on a blockchain network.

Fig. 8: a schematic flowchart illustrating the process of establishing a commissioned operator account and verifying the public key versions for approval.

## DETAILED DESCRIPTION OF EMBODIMENTS

In the following description, reference is made to drawings which show by way of illustration various embodiments. Also, various embodiments will be described below by referring to several examples. It is to be understood that the embodiments may include changes in design and structure without departing from the scope of the claimed subject matter.

The techniques described herein may be implemented in various computing systems, examples of which are described in greater detail below. Such systems generally involve the use of suitably-configured computing devices implementing a number of modules, each providing one or more operations needed to complete execution of such techniques. Each module may be implemented in its own way; all need not be implemented the same way. As used herein, a module may be a structural component of a system which performs an operational role, which may be a portion of or an entire software element (e.g., a function of a process, a discrete process, or any other suitable embodiment). A module may comprise computer-executable instructions and may be encoded on a computer storage medium. Modules may be executed in parallel or serially, as appropriate, and may pass information between one another using a shared memory on the computer on which they are executing, using a message passing protocol or in any other suitable way. Exemplary modules are described below carrying out one or more tasks, though it should be appreciated that the modules and division of tasks described may be merely illustrative of the type of modules that may implement the exemplary techniques described herein, and that the invention is not limited to being implemented in any specific number, division, or type of modules. In some implementations, all functionalities may be implemented in a single module. Further, the modules may be discussed below as all executing on a single computing device for clarity, though it should be appreciated that, in some implementations, the modules may be implemented on separate computing devices adapted to communicate with one another.

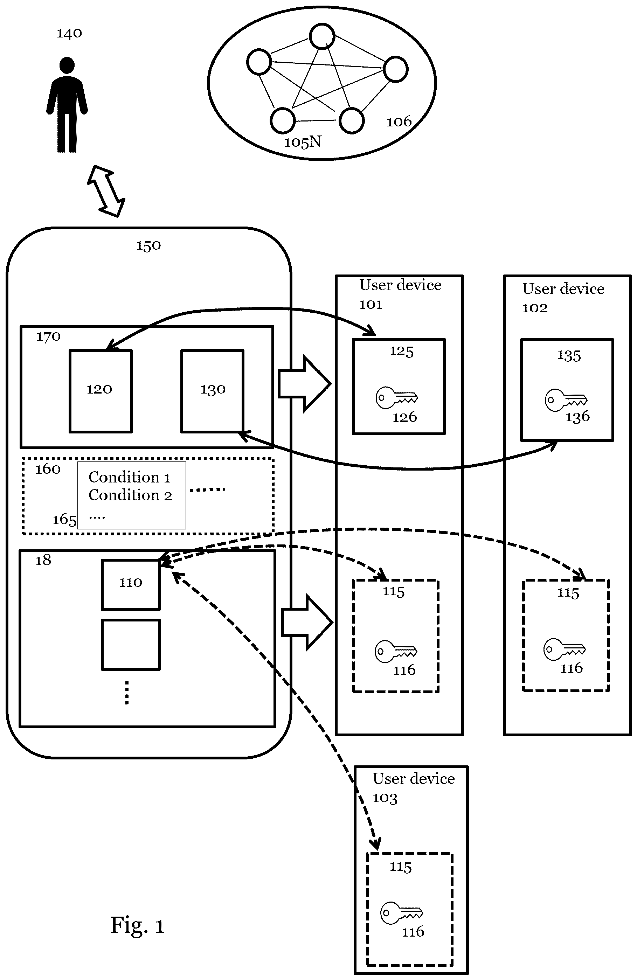

Fig. 1 illustrates an exemplary configuration of techniques disclosed herein. In this example, the technology first involves a blockchain network 106, represented by validator nodes 105N. This blockchain network 106, which can be e.g. public, consortium or private, is particularly configured to enable specific blockchain-based user accounts, such as blockchain-based user account 150 shown in Fig. 1. To do so, the blockchain network 106 may for instance store or provide a specific protocol or protocol logic, which is a set of rules to be applied and followed by participants to the blockchain network 106. This protocol rules some security measures to be implemented by validator nodes 105N but also by any user device enabling interaction with one or more blockchain-based user accounts 150, such as user devices 101 or 102. The protocol may also apply to any intermediate device participating to or interacting with the blockchain network 106.

To improve user security, the blockchain-based user account 150 may be provided with multiple layers and/or with multiple private keys. Private keys are essentially private/secret keys of asymmetric key pairs. Typically, a single private key (or public/private key pair) is obtained for operating a user blockchain account to enable to sign a blockchain operation (e.g. a transaction) and enable authentication of the user account performing the operation. In contrast, in embodiments of the present disclosure, the blockchain-based user account 150 for a user 140 and defined according to the protocol is associated with a plurality of private keys, and preferably with each or at least some of them being associated with a respective blockchain account. Preferably, a first private key 116 is associated with the user account 150 for performing a user operation (e.g. a blockchain operation) on the blockchain network 106, and a second private key 126 and a third private key 136 are associated with the user account 150 for collaboratively configuring one or more execution conditions 165 for the user operation. Further, the first private key 116, the second private key 126 and the third private key 136 are maintained on devices associated with the user 140. This is illustrated in Fig. 1 by user device 101, user device 102 and optionally user device 103, which are devices associated with the user 140 (e.g. used by the user 140 and maintaining a particular private key of the user account 150). Any of the devices can be whatever kind of user device, such as a mobile device, smartphone, tablet device, laptop, personal computer. This list is not exhaustive. For instance, at least user devices 101 and 102 are provided with or attached to a respective display to interact with the user 140. In an embodiment, the user devices 101 and 102 are two smartphones. Similarly, the user device 103 is also preferably a user device provided with a display.

To perform a user operation, like a resource transfer operation, the user account 150 is associated with a first private key 116 to operate on the blockchain network 106. For instance, the first private key 116 is a private key of a public/private key pair associated with an operator account 110 of the blockchain. For instance, the user account 150 may be associated with one or more operator accounts 110, which may be part of an operator layer 180 of the user account 150. An operator account 110 may be provided with at least one or more private keys, wherein each private key is operated on a separate user device associated with user 140. For instance, operator account 110 shown in Fig. 1 may be a local operator account 110 associated with a single private key (first private key 116) and enabled to operate (e.g. execute transactions and manage resources, e.g. digital resources) on blockchain network 106. Accordingly, the first private key 116 is stored on a single device of user 140. It may be stored on device 101 or device 102. However, in other embodiments, it may be stored or operated on another third device associated with the user 140 like user device 103 in Fig. 1. The dashed lines starting from operator account 110 illustrate that the first private key 116 can be stored on one of devices 101, 102 or 103.

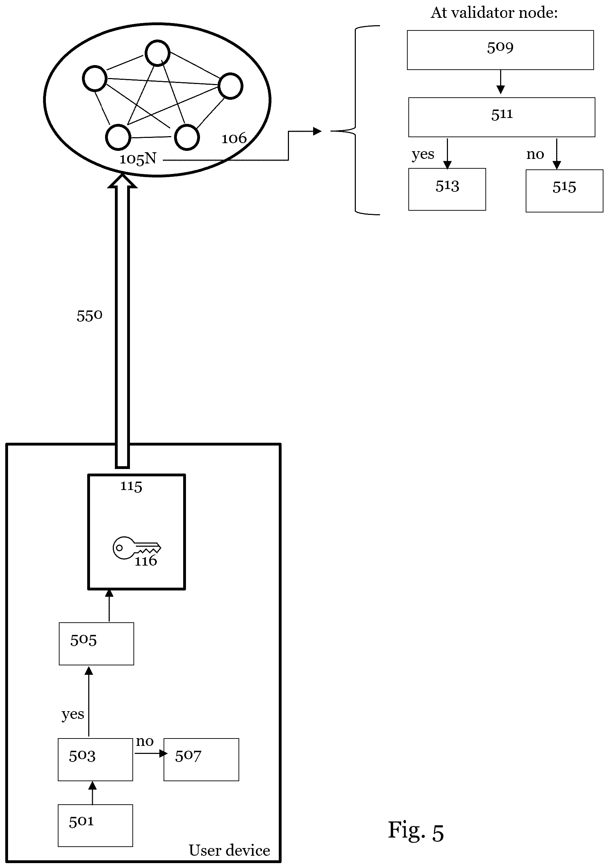

Preferably, the first private key 116 is associated with an operation manager 115 executing on the device that maintains the first private key 116 (e.g. device 101, device 102 or device 103). The first private key 116 is preferably maintained securely (e.g. in a secure environment and/or encrypted). The operation manager 115 is configured to operate the operator account 110 and to initiate user operation requests (e.g. blockchain user operation requests, like resource transfer requests, on or using the blockchain network 106). For instance, the operation manager 115 may be configured to operate operator account 110 to send a user operation request (see e.g. 550 in Fig. 5) signed using the first private key 116 to the blockchain network 106.

However, to particularly regulate the usage of the operator account(s) 110, the user account 150 is preferably associated with a second private key 126 and a third private key 136, of e.g. associated respective public/private key pairs, for collaboratively configuring one or more execution conditions 165 for a user operation initiated using an operator account 110. Moreover, the second private key 126 and a third private key 136 are maintained on respective user devices associated with user 140. This is illustrated in Fig. 1, showing that the second private key 126 is maintained on user device 101 and third private key 136 on user device 102. The second and third private keys 126 and 136 are also preferably maintained securely (e.g. in a secure environment and/or encrypted). Each of these keys may be associated with a respective blockchain account (see proposer blockchain account 120 and approver blockchain account 130 in Fig. 1) in the user account 150. These blockchain accounts may belong to an administrator layer 170 of the user account 150. The function of these keys and/or accounts of this layer is to secure access to, and control of, the one or more execution conditions 165 which rule the usage of the operator account(s) 110.

In an embodiment, the proposer blockchain account 120, the approver blockchain 130 and/or the operator account(s) 110, and specifically their associated agents or manager on their devices, are provided with means to communicate with the blockchain network 106 through remote procedure calls to a validator node 105N and to receive emitted events from a validator node 105N. In an embodiment, they may be provided with means to communicate with a validator node 105N through query functionality in case an emitted event was missed, while in another embodiment, they may be provided with means to communicate with a light node of the blockchain network keeping track of activities recorded on the blockchain.

According to the protocol, an operator account 110 can initiate a user operation on or using the blockchain network 106 especially only if it meets the one or more execution conditions 165. These execution conditions 165 may be primarily stored on the blockchain of blockchain network 106. A copy of them may be made available for use on the device that operates the first private key 116 of the operator account 110. Further according to the protocol, a second security step can take place on a validator node 105N that receives a user operation request from operation manager 115 by also verifying the compliance of the requested user operation to the one or more execution conditions 165 to apply to the used operator account 110. This verification may also take place on other validator nodes or all the validator nodes (e.g. as part of a consensus process). This dual-step security particularly aims to avoid processing of user operations sent from a hacked operator account (see also Fig. 5).

To further prevent against tamper, the one or more execution conditions 165 can be preferably configured (e.g. setup or modified) only collaboratively using the second private key 126 and the third private key 136. In a preferred embodiment, they are used to configure the one or more execution conditions 165 according to a proposal - approval scheme using the first device 101 and the second device 102. For instance, beside first private key 116, which may be used for signing a user operation request 550 sent to the blockchain network 106, the second private key 126 of the user account 150 may be used for signing a configuration proposal of the one or more execution conditions 165 sent by the first device 101 to the blockchain network 106 and the third private key 136 of the user account 150 may be used for signing a configuration approval of the configuration proposal sent by the second device 102 to the blockchain network 106. In a preferred implementation, the second private key 126 may be associated with a proposer agent 125 configured to execute on the first device 101 and the third private key 136 with an approver agent 135 configured to execute on the second device 102. The proposer agent 125 may be configured to submit a configuration proposal of the one or more execution conditions 165 to the blockchain network 106 signed by the second private key 126 and the approver agent 135 may be configured to submit a configuration approval or a configuration refusal of the configuration proposal signed by the third private key 136 to the blockchain network 106. This setup may facilitate a proposal-approval scheme where the proposer agent 125 can initiate configuration proposals for execution conditions 165, which are then approved or rejected by the approver agent 135. This collaborative mechanism ensures that any changes to the execution conditions require consensus between the two devices, thereby enhancing security. Moreover, thanks to the distribution of the second private key 126 and third private key 136 on two separate devices, the execution conditions 165 associated with the user account 150 cannot be tampered with or modified by an attack against a single user device like user device 101. A fraudster would need to tamper both devices 101 and 102, which is more complicated and requires the knowledge of the existence of the second device. In contrast, the user 140 only needs to use the device that stores the first private key 116 to operate an associated operator account 110 to perform a user operation in accordance with the safeguard provided by the one or more execution conditions 165. Hence, user account security is improved while facilitating usage of the user account via operator account(s) 110.

To implement the safeguard, the one or more execution conditions 165 may correspond to one or more pre-emptive authorizations of each associated operator account's activities. They preferably comprise one or more execution conditions 165 defined by one or more resource receiver parameters, and/or one or more execution conditions 165 defined by one or more resource transfer parameters, and/or one or more execution conditions 165 defined by one or more temporal parameters.

For instance, the one or more resource receiver parameters may comprise identification data of one or more authorized resource receivers. These identification data may correspond to a list, table, group of identification information unambiguously identifying each resource receiver that the user 140 has authorized to receive resources. For instance, a resource receiver may be associated with a specific identifier and the identification data may be a collection of all the specific identifiers associated with the authorized resource receivers. The specific identifiers may be addresses (e.g. postal addresses), digital addresses or specific IDs of the authorized resource receivers. A resource receiver may be for instance a shop, store, restaurant, business, vendor, service provider or the like. It can be also a particular private person (e.g. a family member) or an association of private persons. The identification data of the one or more authorized resource receivers may be based at least in part on a list of authorized resource receivers provided by one or more trusted authorization providers and/or a user selection of at least some of the one or more authorized resource receivers. For instance, the list of authorized resource receivers may include list of vetted public entities that are e.g. certified to be trustful. Public entities such as e.g. businesses or service providers (e.g. vendor, shop, restaurant etc.) may request certification that they meet the security requirements set by the protocol to be then put on the list of vetted public entities. In another example, the user 140 may also be provided with the option of granting time-limited authorisations to some receivers, thereby providing a dynamic control to the user 140 and further securing the user account 150. In such an embodiment, vetted public entities may be also required to stake assets in order to participate to mitigate the risk of malicious intent.

Accordingly, in practice, the one or more execution conditions 165 defined by the one or more resource receiver parameters may be met by a user operation initiated with the operator account 110 when the resource receiver indicated in the user operation is an authorized resource receiver identifiable in the identification data of the one or more authorized resource receivers. If multiple resource receivers are indicated in the user operation, all should be identifiable in the identification data. The identification data may also, alternatively or in addition, comprise a resource account address (e.g. a blockchain address) or ID associated with each authorized resource receiver. In a preferred embodiment, a receiver is identifiable with their blockchain address and the identification data comprises a blockchain address of each authorized resource receiver. Importantly, the target resource account address specified in the user operation should be identifiable in the identification data to authorize the user operation. Further, the one or more execution conditions 165 defined by the one or more resource receiver parameters may also include the verification that the resource receiver has provided a confirmation of participation to the user operation. For instance, if a user operation is requested between user 140 and a resource receiver having an own terminal device (e.g. a store or a restaurant), there may be a requirement that the user operation request comprises a participation token from the resource receiver. This confirmation suggests the physical proximity of the user device 101 and the resource receiver. This would further reduce the potential for unauthorised remote operations from a compromised device linked to the operator account 110. Hence, the one or more execution conditions 165 defined by one or more resource receiver parameters contribute to prevent misuse of the associated operator account 110.

The one or more resource transfer parameters may themselves comprise a resource transfer limit defining an authorized maximum resource transfer amount for the user operation. This may represent a spending limit. Accordingly, the one or more execution conditions 165 defined by the one or more resource transfer parameters may be met by the user operation when a resource transfer amount in the user operation is below or equal to the resource transfer limit. When multiple receivers are specified in the user operation, the authorized maximum resource transfer amount for the user operation may apply to the sum of all individual amounts to the multiple receivers. The authorized maximum resource transfer amount is one example of contemplated resource transfer parameters, which may globally set any kind of resource transfer limits set by the user 140.

Further, in addition or alternatively to the one or more resource transfer parameters, the one or more temporal parameters may comprise a time-based resource flow limit defining an authorized maximum amount of resource transferable over a predefined time period. In this case, the one or more execution conditions 165 defined by the one or more temporal parameters is met by the user operation request 550 when a sum of a resource transfer amount in the user operation and resource transfer amounts of past user operations performed over the predefined time period using the user account 150 is below or equal to the time-based resource flow limit. These temporal parameters may accordingly define the predefined time period as e.g. a limited time window (from a start time to an end time) and/or a recurrent time window (e.g. a per-week or per-month spending limit). The time-based resource flow limit may be specific to the operator account 110 or may alternatively concern all operator account(s) 110 of the user account 150.

In the present discussion, the resources that are transferable using a user operation from an operator account 110 may be fund associated with the operator account 110 on the blockchain of the blockchain network 106. They may also correspond to fund on another crypto network. Alternatively, the resources may also simply be tokens representing an entity, product, object or service. The resource amount limits set by the resource transfer parameters and the one or more temporal parameters may be set accordingly and may require conversions according to some exchange rates.

The one or more execution conditions are preferably maintained in an operation profile 160 associated with the user account 150. The profile (and especially its one or more execution conditions 165) may be configurable by the user 140 through the collaborative use of the second and third private keys. The operation profile 160 may be based on a template operation profile comprising default parameters provided during the setup operation and further customizable by the user 140. For instance, the operation profile 160 may correspond to a predefined decentralized operation profile facilitated by the blockchain network, which can be customized to the user's needs. During setting, the user may walk through the predefined one or more execution conditions and associated parameters and may accept all of them, may partially accept them, or may decline them completely. Additionally or alternatively, the user 140 can customize the profile, conditions and/or parameters individually. In another embodiment, the user 140 may be provided with an empty profile at creation of the operation profile that the user 140 may customize.

In an embodiment, the one or more execution conditions 165 may apply to all operator accounts 110 in the user account. Alternatively, each operator account 110 may be associated with an own set of execution conditions 165. In another embodiment, a first set of execution conditions 165 may apply to a first group of operator accounts and a second set of execution conditions 165 may apply to a second group of operator accounts. The operation profile 160 may store these sets, and preferably maintained on the blockchain of the blockchain network 106.

In an embodiment, the user account 150 may also comprise a temporary operation profile configured by the user 140, the temporary operation profile comprising one or more temporary execution conditions to be temporarily applied to the operator account 150. For instance, the temporary operation profile may maintain a starting time, an end time, and one or more temporary execution conditions defined by one or more temporary parameters. The one or more temporary parameters may comprise one or more temporary resource receiver parameters, one or more temporary resource transfer parameters, and/or one or more temporary temporal parameters, wherein the starting time and the end time define a time window during which the temporary operation profile applies to the operator account. Such a temporary operation profile may be particularly suitable when the user is about to spend time in another environment during a limited time period in the future (e.g. vacation). In this case, the temporary operation profile may override and/or complete the operation profile 160, however, only during the defined time window.

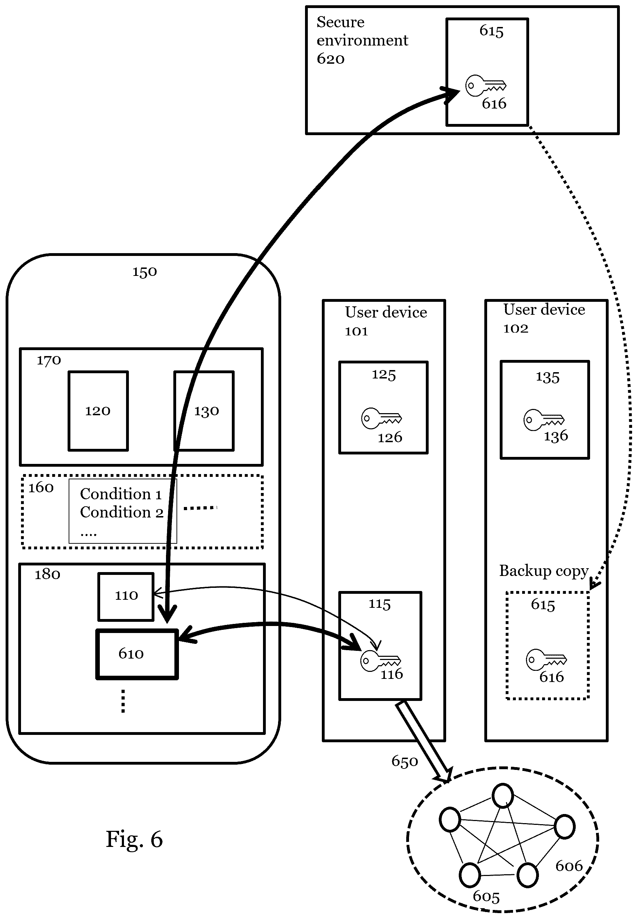

In summary, Fig. 1 depicts a robust system that leverages dual-key security and a layered account structure to provide a secure and efficient framework for managing blockchain-based user accounts. The proposal-approval scheme, signing operations, and execution conditions are integral components that work together to ensure the system's reliability and security. They also follow a self-custody configuration, enabling the user 140 to effectively own the keys controlling the user account while enabling to easily transfer resources using a single user device (e.g. the device that maintains the first private key). Moreover, as explained further below, it may permit the completion of user operation for resource transfer operation outside the blockchain network 106 (e.g. on an external blockchain network) by providing additionally a commissioned operator account 610 employing a dual-key signature scheme and to which the one or more execution conditions 165 of the operation profile 160 still apply (see Fig. 6 below).

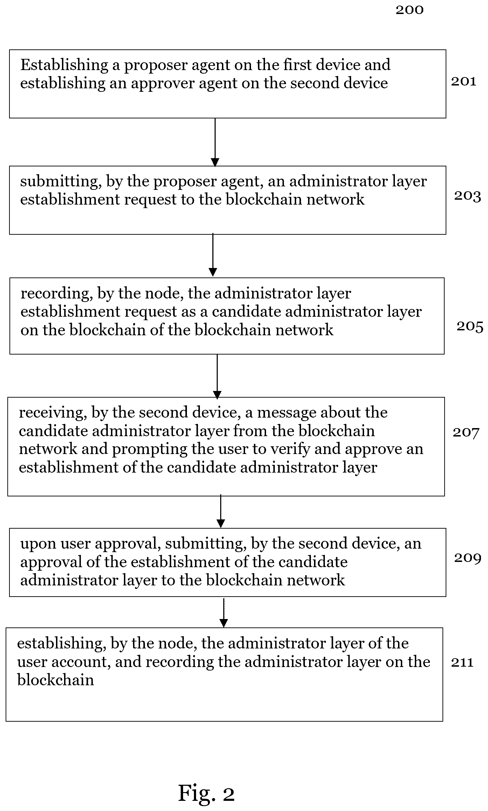

Fig. 2 illustrates the process 200 of establishing the administrator layer 170 of a user account 150 within a blockchain network 106. This is a first step to setup the user account 150, before providing the user account 150 with any operator account 110. This process may begin with establishing a proposer agent 125 on the first device 101 and an approver agent 135 on the second device 102, as indicated by step 201. The proposer agent 125 is associated with the second private key 126 and a corresponding first blockchain address (e.g. the blockchain address of the proposer blockchain account 120), while the approver agent 135 is associated with the third private key 136 and a corresponding second blockchain address (e.g. the blockchain address of the approver blockchain account 130). These agents enable to operate the proposer blockchain account 120 and the approver blockchain account 130 on their respective devices 101 and 102.

Further, in some embodiments and as an intermediate step, the proposer agent 125 may receive the second blockchain address. For instance, the second blockchain address of the approver agent 135 is received by the proposer agent 125 as part of an exchange of agent blockchain addresses conducted between the first device 101 and the second device 102 and using e.g. electronic means (for example, but not limited to, NFC). In another embodiment, it may be simply entered manually by the user 140 into a user interface of the proposer agent 125.

In step 203, the proposer agent 125 may submit an administrator layer establishment request to the blockchain network 106 (i.e. to at least one validator node for processing by the blockchain network). This request may include the first and second blockchain addresses. It may also include the second blockchain address and simply a representation of the first blockchain address (e.g. a signature of the administrator layer establishment request using the second private key, which allows to authenticate the request so that the node can deduct the first blockchain address from the public key associated with the second private key). The blockchain network 106 may in turn record the establishment request as a candidate administrator layer on the blockchain 106, as shown in step 205.

Step 207 involves receiving, by the second device 102, a message about the candidate administrator layer from the blockchain network and prompting, by the second device 102, the user 140 to verify and approve an establishment of the candidate administrator layer. For instance, it may involve prompting the user to verify the first blockchain address of the proposer agent 125, to ensure that the administrator layer 170 is setup with the correct blockchain accounts. Upon user approval, the second device 102, and particularly via the approver agent 135, may submit an approval of the establishment to the blockchain network 106, as described in step 209.

Finally, in step 211, after receipt of an indication of the approval, the blockchain network 106 may establish the administrator layer 170 of the user account 150 and may record it on the blockchain. The blockchain network 106 may record the administrator layer 170 including for instance an indication (e.g. blockchain address) of the associated proposer blockchain account 120 and approver blockchain account 130 on the blockchain 106, thereby completing the establishment process. The administrator layer 170 is ready for configuring the one or more execution conditions 165 for the operator account(s) 110. The establishment process ensures that the administrator layer 170 is securely set up, leveraging the dual-key security model provided by the proposer agent 125 and the approver agent 135.

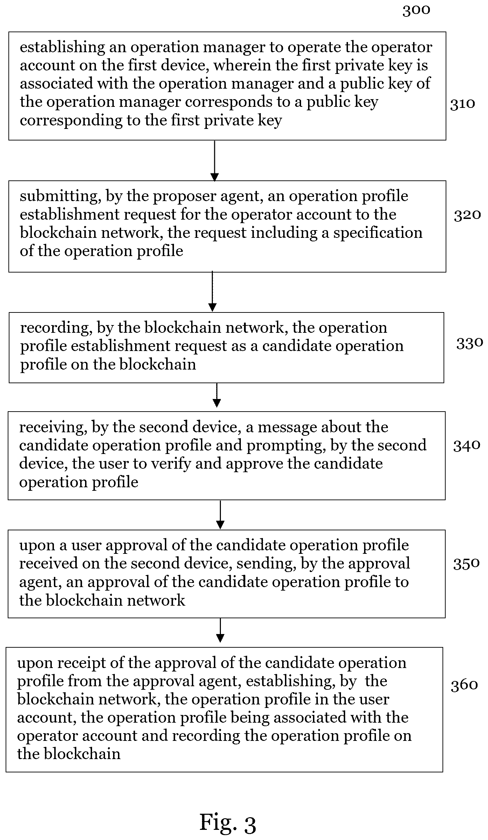

After establishment of the administrator layer 170, a process of establishing an operator account 110 and its associated operation profile 160 on the blockchain network 106 may be performed as illustrated in the flow diagram 300 of Fig. 3. The process may begin with step 310, which involves establishing an operation manager 115 to operate the operator account 110 e.g. on the first device 101. In this context, the first private key 116 maintained on the first device 101 is associated with the operation manager 115, and a public key of the operation manager 115 corresponds to a public key corresponding to the first private key 116.

Subsequently, step 320 may involve the proposer agent 125 submitting an operation profile establishment request for the operator account 110 to the blockchain network 106 (i.e. to at least a validator node for processing by the blockchain network 106). This request may include a specification of the operation profile 160. The specification may outline the parameters and conditions under which the operator account(s) 110 will function. In some embodiments, the specification is obtained using a user interface associated with or on the first device 101, where the user 140 may configure the one or more execution conditions 165 as explained above. The request may also comprise information about the operator account 110, and/or any information on association of the operator account 110 with respective one or more execution conditions of the profile 160.

In step 330, the blockchain network 106 may record the operation profile establishment request as a candidate operation profile on the blockchain. Subsequently, the second device 102 may receive a message about the candidate operation profile and prompt the user 140 to verify and approve the candidate operation profile (step 340)This may involve displaying details associated with the candidate operation profile on a display associated with the second device 102 to let the user 140 verify that the correct operator account(s) and/or the correct execution conditions are to be setup.

Upon receiving user approval of the candidate operation profile on the second device 102 (e.g. via a user interface associated with the second device 102), the approval agent 135 may send in step 350 an approval of the candidate operation profile to the blockchain network 106.

In step 360, upon receipt of the approval of the candidate operation profile from the approval agent 135, the blockchain network 106 may establish the operation profile 160 in the user account 150. The operation profile is associated with the operator account(s) 110. For instance, it may include indications of associations between the operator account(s) 110 and their associated one or more execution conditions 165 setup by the user 140. The operation profile may be then recorded on the blockchain. Conversely, if the approval agent 135 returns a refusal of the candidate operation profile, the blockchain network 106 may refuse the operation profile establishment request and may record the refusal on the blockchain. In that case, no operation profile is setup and no operator account may operate with the user account 150. To setup any further operator account and an associated operation manager on a given device, the same procedure is to performed, while noting that the further operator account and the associated operation manager are deterministically generated from a respective private key created and maintained on the given device. However, steps 320 to 360 are still to be performed using the first device 101 and the second device 102 and including, in the operation profile establishment request, information about the further operator account, and/or any information on association of the further operator account with respective one or more execution conditions of the profile 160.

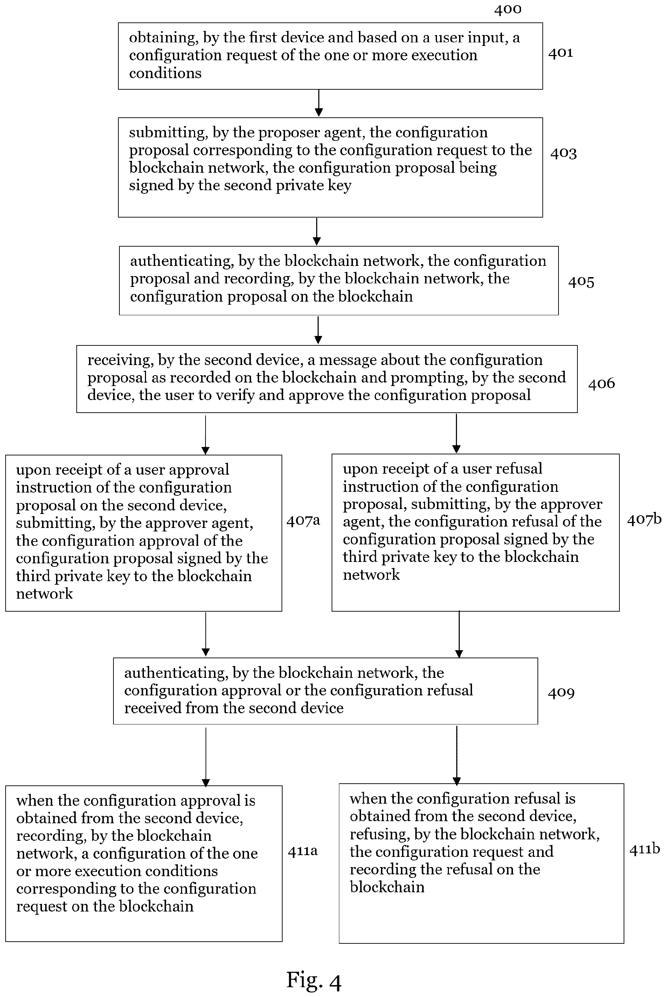

Fig. 4 illustrates a flowchart detailing the process 400 for configuring said one or more execution conditions 165 using a first device and a second device (e.g. devices 101 and 102 of Fig. 1). This process is especially applicable after the one or more execution conditions 165 have been setup for the first time, e.g. after having conducted process 300. Method 400 may begin at step 401, where the first device 101 obtains a configuration request of the one or more execution conditions 165 of the user account 150 based on a user input. For instance, the user 140 may interact with a corresponding user interface associated with or provided on the first device 101.

At step 403, the proposer agent 125 may execute on the first device 101 to operate the proposer blockchain account 120 to submit a configuration proposal corresponding to the configuration request to the blockchain network 106 (e.g. to at least a validator node 105N for processing by the blockchain network 106). This configuration proposal is signed by the second private key 126.

Following this, at step 405, the blockchain network 106 may authenticate the configuration proposal and record the configuration proposal on the blockchain. Subsequently, at step 406, the second device 102 may receive a message about the configuration proposal as recorded on the blockchain and may prompt the user 140 to verify and approve the configuration proposal. This prompts the user for an instruction on the configuration proposal on the second device. Similarly as with process 300, the user 140 may be also provided with an overview (using e.g. a display associated with the second device 102) of the configured one or more execution conditions according to the configuration proposal.

The process then diverges based on the user's response. At step 407a, if a user approval instruction of the configuration proposal is received on the second device 102, the approver agent 135 may submit a configuration approval of the configuration proposal, signed by the third private key 136, to the blockchain network. Conversely, at step 407b, if a user refusal instruction of the configuration proposal, the approver agent 135 may submit a configuration refusal of the configuration proposal, signed by the third private key 136, to the blockchain network.

At step 409, the blockchain network may authenticate the configuration approval or the configuration refusal received from the second device. If the configuration approval is obtained from the second device, as shown in step 411a, the blockchain network (e.g. the validator node 105N) may record a configuration of the one or more execution conditions corresponding to the configuration request on the blockchain. If the configuration refusal is obtained from the second device, as shown in step 411b, the blockchain network 106 may simply refuse the configuration request and may additionally record the refusal on the blockchain. Hence, using the proposal-approval scheme as illustrated in processes 200, 300 and 400 enables user 140 to safely establish the administrator layer 170, the operation profile 160 and (re)configure the associated execution conditions 165 in a dual-key self-custody manner, thereby preventing the user account from tamper.

Fig. 5 illustrates a computer-implemented method for providing a blockchain-based user account 150 for a user 140 in blockchain network 106 as explained above with any of Fig. 1 to Fig. 4, and especially for processing a user operation request in the blockchain network 106. Fig. 5 depicts the interaction between a user device and a validator node 105N within the blockchain network 106, and particularly with the user device that maintains the first private key 116 associated with associated operator account 110 of the user account 150 for performing a user operation on the blockchain network 106 using the operator account 110. The method comprises first steps performed by the user device to send a user operation request 550 to validator node 105N of the blockchain network 106. It preferably further comprises second steps performed by the validator node 105N that receives the user operation request 550. Fig. 5 particularly illustrates a dual-step verification process whether the user operation meets the one or more execution condition 165 associated with the used operator account 110, achieving a kind of dual authentication of the operation. It preferably comprises a first verification of the compliance of said operation to the one or more execution conditions 165 performed at the user device and a second verification of the compliance of said operation to the same one or more execution conditions 165 at the validator node 105N. The second verification is a second safeguard for the event that the user device is being tampered with and that a fraudulent user operation request is submitted to the blockchain network 106.

The user device particularly comprises an operation manager 115 to operate the operator account 110 used for the user operation. The first steps of the method may comprise steps 501 to 507 performed by the user device. These steps may all be performed by the operation manager 115 or at least partially by or using the operation manager 115. At step 501, the user device first obtains a user operation request. For instance, a user interface may be provided on the user device enabling user 140 to initiate a user operation, such as a resource transfer operation targeted to a resource receiver. The user operation may be initiated manually via the user interface and/or initiated by placing the user device at a position within a threshold distance from a terminal device associated with a resource receiver, e.g. a store. For instance, the obtaining of the user operation request for the user operation may comprise placing the user device at a position within a threshold distance from the terminal device to initiate a collaborative preparation of the user operation request between the user device and the terminal device, receiving, by user device, a participation token from the terminal device, and obtaining, by the user device, the user operation request for the user operation based on the collaboratively prepared user operation request. In an example, the participation token (e.g. a signature of the resource receiver using an associated private key) acts as a proof of commitment of the resource receiver in the user operation. In an embodiment, the one or more execution conditions 165 defined by one or more resource receiver parameters explained above may further comprise the verification of the presence of a participation token in the user operation or the user operation request, and especially the presence of a fresh participation token obtained for the initiated user operation. If no participation token is identified or if the participation token is not specific to the initiated user operation, the verification fails and the one or more execution conditions 165 defined by one or more resource receiver parameters are hence not met.

After having obtained the user operation request, the user device (e.g. its operation manager 115) then may determine whether the user operation request 550 meets the one or more execution conditions 165 to be met for execution of the requested user operation (step 503). The one or more execution conditions 165 are particularly those associated with the operator account 110 used for the user operation. They are stored e.g. in operation profile 160 as explained above. When it is determined that the one or more execution conditions 165 are met, the user device using the operation manager 115, or alternatively the operation manager 115 itself, may continue with operating the operator account 110 to send the user operation request 550, signed using the first private key 116, to the blockchain network 106 (step 505 and arrow 550 in Fig. 5). Conversely, when it is determined that the one or more execution conditions 165 are not met, the user operation request 507 may be dismissed (step 507).

Once the user operation request 550 is received by a validator node 105N of the blockchain network 106, the second steps of the method may be performed. For instance, the validator node 105N may first authenticates the user operation request (step 509). Following successful authentication, the validator node 105N may verify whether the one or more execution conditions 165 are met by the user operation comprised in the user operation request (step 511). The one or more execution conditions 165 may at least be the same one or more execution conditions 165 verified during the first steps of the method by the user device, i.e. the one or more execution conditions 165 associated with the employed operator account 110. When the verification succeeds, the validator node 105N may proceed with expediting the user operation request (step 513). Otherwise, when the verification fails, the validator node 105N may refuse the user operation request and may record the refusal on the blockchain (step 515).

In a first embodiment, the operator account 110 employed for the user operation may be a local operator account of the user account 150, the local operator account configured to operate on the blockchain network 106. In this case, the user operation is a user operation on the blockchain of the blockchain network 106 and step 513 may comprise submitting and recording, by the validator node 105N, a blockchain transaction corresponding to the user operation on the blockchain of the blockchain network 106. It may involve reaching consensus between the validator nodes 105N. For instance, blockchain network 106 may operate using a Byzantine Fault Tolerant, BFT, consensus algorithm, which may allow continued operation with e.g. only two-thirds of the validator nodes (enforcing e.g. the protocol logic) and acting truthfully and responding in a timely manner.

In a second embodiment and as illustrated in Fig. 6, the operator account 110 may be a commissioned operator account 610 of the user account 150. A commissioned operator account is an operator account e.g. of the operator layer 180 of the user account 150 configured to initiate a user operation targeted to a receiver outside the blockchain network 106 (e.g. to a resource receiver account and/or a smart contract). The initiated user operation may be a user operation to be performed on an external blockchain network 606 (e.g. Ethereum) other than the blockchain network 106. The user operation request 550 is for instance a request for an external user operation 650 on the external blockchain network 606. However, the request is still processed using the blockchain network 106 in order to verify that the external user operation still meets the one or more execution conditions 165 and especially those specifically associated with the commissioned operator account 610, if any. Moreover, to further ensure robustness of the user account for such external user operations against attacks, a dual-key signature scheme is preferably implemented with the commissioned operator account 610. For instance, the first private key 116 and a fourth private key 616 may be associated with the commissioned operator account 610, where the fourth private key 616 is a private key of a public/private key pair operated by a trusted agent 615 on a secure environment 620. In an example, the trusted agent 615 may operate on a secure server remote from user device 101 or user device 102 associated with the user 140. However, additionally or alternatively, the trusted agent 615 may also operate, at least as a backup, on the second device associated with the user 140 (e.g. user device 102). The trusted agent 615 may be configured to sign the external user operation 650 using the fourth private key 616 in collaboration with the operation manager 115 using the first private key 116 according to a so-called dual-key signature scheme.

In one embodiment, the commissioned operator account may be operated to generate dual-key signatures supporting operation on ECDSA based Client Protocols (e.g., Bitcoin and Ethereum). The dual-key signatures may in such an embodiment be generated using homomorphic operations to ensure the integrity of the dual-key signature generation. Such an embodiment would further employ applicable zero knowledge proofs (ZKPs) in the setup process of the commissioned operator account and in the dual-key signature generation process. In another embodiment, the commissioned operator account may be operated to generate dual-key signatures supporting operation on EdDSA based Client Protocols (e.g., Solana and Algorand). Such an embodiment would likewise employ applicable ZKPs.

For instance, in the case of the Elliptic Curve Digital Signature Algorithm (ECDSA) and the Edwards-Curve Digital Signature Algorithm (EdDSA), which are prevalent signature schemes, both algorithms are public key elliptic curve algorithms. In both cases, the public key (denoted Q in ECDSA and A in EdDSA), is a curve point generated from multiplying the secret key to a generator point G, specific for the curve.

The signature of either system consists of a curve point R, sent either in full (EdDSA) or represented by its x-coordinate and a recovery value v indicating which of the two y-coordinates (symmetrical around the x-axis) returns the correct public key (ECDSA), and a value s, verifying that the secret integer k, generating the point is known to the sending account. In both systems, the curve point is generated from multiplying the secret key to the generator point.

The value s is in ECDSA computed as:

$$s = k^{-1}(H(m) + r \cdot sk)$$

where H(m) is the hash of the message, r is the x-coordinate of $R$ and $sk$ is the secret key. In EdDSA, the value s is computed as:

$$s = k + ha$$

where $a$ is the secret key and $h$ is the hash of the concatenated values of $R, A$ and m:

$$h = H(R||A||m)$$

Extending the systems from single-key to dual-key is straightforward for the linear EdDSA but more complicated for the non-linear ECDSA. The public key and the signature-specific curve point in EdDSA can be calculated by point addition

$$A = A_a + A_b$$

$$R = R_a + R_b$$

and the verification value can be computed by addition:

$$s = s_a + s_b$$

In ECDSA, the security issue arising from the shared multiplication of $k^{-1}$ is solved through multiplicative sharing of the secret keys and nonces, and by introducing e.g. Paillier encryption. Through the homomorphic properties of Paillier, operations can be performed without leaking sensitive information. This is achieved by making the Paillier-encrypted first key available to the device holding the second key during account setup. As a result, the signature routine is simplified, eliminating the need for the otherwise costly process of generating and verifying zero-knowledge proofs related to the secret Paillier key.

Thus, the device holding the first key only need to provide the partial curve point ($R_1$) of the signature during the dual-key signing. For instance, if the elliptic curves are the same (defined by the same generator point G) for both key pairs $Q_1/sk_1$ and $Q_2/sk_2$, a common public key Q for the dual-key signature may be generated. For instance, if

$$Q_1 = sk_1 \cdot G$$

and

$$Q_2 = sk_2 \cdot G$$

a common Q may be defined such that:

$$Q = sk_1 \cdot Q_2 = sk_2 \cdot Q_1$$

Setting aside semantic security details for readability, the device holding the second key can independently calculate:

$$R = k_2 \cdot R_1 = (r, \cdot)$$

$$c_1 = Enc_{pk}(k_2^{-1} \cdot H(m))$$

$$c_2 = k_2^{-1} \cdot r \cdot sk_2 \odot Enc_{pk}(sk_1)$$

$$c_3 = c_1 \oplus c_2$$

By providing $c_3$ to the device holding the first key it can be decrypted and s can be calculated:

$$s = k_1^{-1} dec(c_3)$$

which simplifies to:

$$s = k_1^{-1} \cdot k_2^{-1} \cdot (h'_m + r \cdot sk_2 \cdot sk_1)$$
$$= k^{-1}(H(m) + r \cdot sk)$$

This result is powerful. The dual-key signing produces signatures indistinguishable from the ordinary, single key case. This makes it applicable to any blockchain based upon ECDSA.

Such a dual-key signature process may be implemented by the first private key 116 and the fourth private key 616. If for instance, the operation manager 115 configured to operate the first private key 116 and the trusted agent 615 configured to operate the fourth private key 616 exchange their respective public key in advance, they may sign collaboratively the external user operation 650. For instance, if the first private key 116 would correspond to $sk_1$ of the key pair $Q_1/sk_1$ and the fourth private key 616 to $sk_2$ of the key pair $Q_2/sk_2$ of the above presented calculation, the operation manager 115 may provide Ri and $Enc_{pk}(sk_1)$ to the trusted agent 615, which may then calculate R, $c_1$, $c_2$ and $c_3$ as part of some first steps of the dual-key signature on the external user operation. This value $c_3$ may form at least part a partial signature on the external user operation and the trusted agent 615 may then provide the partial signature to the blockchain for record, where it is available to the operation manager 115. It is to be understood that the value $R_2$ may also be provided back, for the operation manager 115 to separately generate R and verify the signature when finalized, before sending it to the designated chain. Subsequently, the operation manager 115 may complete the dual-key signature by performing a second calculation step using at least the value $c_3$ to calculate at least s as explained above. Accordingly, in embodiments, the operation manager 115 and the trusted agent 615 are configured to collaboratively generate the dual-key signature on the external user operation 650, wherein the dual-key signature authenticates the external user operation 650 before the external blockchain network 606 and is verifiable using a corresponding single public key (e.g. Q). Hence, the user account 150 may operate using an identity provided by the commissioned operator account 615, where the external user operation is signed according to the above dual-key signature scheme, presenting a single identity and authentication. This identity is nevertheless difficult to tamper with and could not be hacked by a fraudster that would succeed to tamper with the first device 101 of the user (and specifically the first private key). Hence, user security is increased.

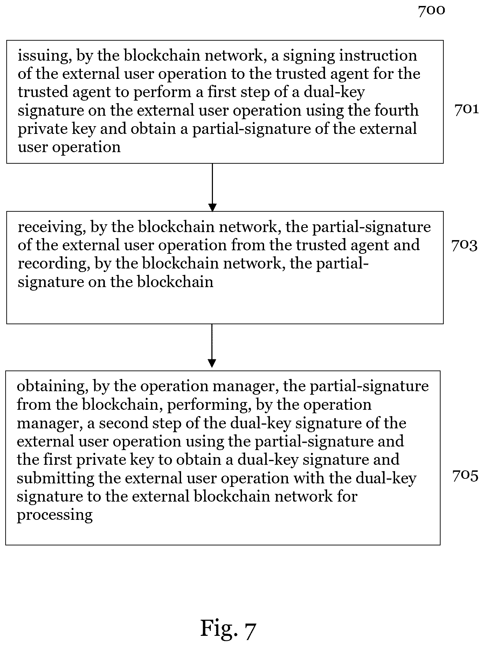

Fig. 7 illustrates a flowchart 700 depicting an exemplary method for expediting the user operation request 550 received from the device that maintains the first private key (e.g. 101) when the user operation request 550 was issued from a commissioned operator account 610 via the operation manager 115 on the device and after successful verification of the associated one or more execution conditions 165 at the validator node 105N (see step 513 above). In this case, the blockchain network 106 issues a signing instruction of the external user operation to the trusted agent 615 to request the trusted agent 615 to partake to the dual-key signing operation on the external user operation. The trusted agent is responsible for performing a first step of a dual-key signature on the external user operation using the fourth private key, e.g. as explained above. This step results in obtaining a partial-signature of the external user operation 650.

At step 703, the blockchain network 106 receives the partial-signature of the external user operation 650 from the trusted agent 615 and the blockchain network (i.e. at least the validator node 105N) records the partial-signature on the blockchain.

In step 705, the operation manager 115 obtains the partial-signature from the blockchain and performs a second step of the dual-key signature on the external user operation. This step involves using the partial-signature and the first private key 116 to obtain a dual-key signature and complete the signature operation (see above exemplary calculation). The operation manager 115 then submits the external user operation with the dual-key signature to the external blockchain network for processing.

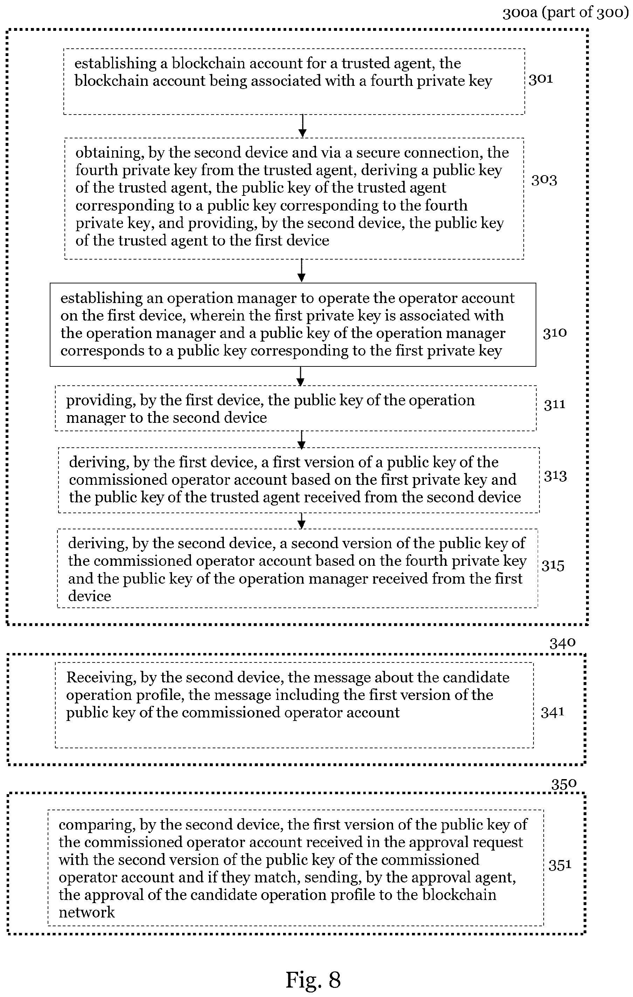

Fig. 8 illustrates a detailed process for establishing a commissioned operator account 615 within blockchain network 106 as part of the process 300 of establishing the operator account and the operation profile 300 presented above. For instance, before the step of establishing 310 the operation manager 115 to operate the operator account 110 on the first device 101, a blockchain account may be first established for the trusted agent 615 (step 301). This blockchain account is associated with a fourth private key, e.g. private key 616 (see above). In step 303, the second device 102 may obtain the fourth private key 615 from the trusted agent 615 via a secure connection. It is to be understood that this may also be the opposite, wherein, preferably, the fourth private key 616 may be obtained by the trusted agent 615 from the second device 102. In any case, the second device 102 then may derive a public key corresponding to the fourth private key 616. This public key of the trusted agent 615 is then provided by the second device 102 to the first device 101. Then, step 310 is performed, where the operation manager 115 to operate the operator account is established on the first device 101 (see plain box 310 in steps 300a of Fig. 8). The first private key 116 is associated with the operation manager 115, and a public key of the operation manager 115 that corresponds to the first private key 116 is provided.

Then, after step 310, step 311 is performed where the first device may provide the public key of the operation manager 115 to the second device. Following this, step 313 involves the first device 101 deriving a first version of a public key of the commissioned operator account (e.g. a first version of Q, as explained above). This derivation is based on the first private key 116 and the public key of the trusted agent 615 received from the second device 102.

In turn, step 315 involves the second device 102 deriving a second version of the public key of the commissioned operator account. This derivation is based on the fourth private key 616 and the public key of the operation manager 115 received from the first device 101.

Hence, following these further steps (noted 300a in Fig. 8), each of the first device 101 and the second device 102 is provided with a respective version of the public key of the commissioned operator account 610. This will be useful to safely establish the operator profile of the whole user account 150, as explained below.

Specifically, the step 340 of receiving, by the second device 102, the message about the candidate operation profile comprises receiving (341) the message about the candidate operation profile, the message including the first version of the public key of the commissioned operator account 610 obtained by the first device 101. This first version of the public key of the commissioned operator account 610 may be e.g. included in the operation profile establishment request sent by the proposer agent 125 of the first device 101 to the blockchain network 106 at step 320 of process 300. Subsequently, as part of the verification of the candidate operation profile performed on the second device 102 after receipt of the approval request (see step 350 of process 300), the approval agent 135 of the second device 102 may compare (351) the first version of the public key of the commissioned operator account 615 received in the approval request with the second version of the public key of the commissioned operator account 615 (step 341). If they match, the approval agent 135 may send the approval of the candidate operation profile to the blockchain network 106. It may be sent even without obtaining any user approval on the second device. In this way, it ensures that the commissioned operator account is set up properly and that the right keys/accounts are associated with the user account 150 and operation profile 160.

Hence, the disclosed technology provides an increased accessibility to user-sovereign-multi-key-security for blockchain operations by enabling a self-custody multi-key administrator layer to moderate blockchain operations of a single-key system-native local operator account and a multi-key system-external Commissioned operator account. An operation profile, scoping the local operator account's and the Commissioned operator account's authorised activities, is maintained by the administrator layer. The protocol compliant blockchain network may expedite user operations (e.g. blockchain operations) for the local operator account and instruct the signing participation of a trusted gent for blockchain operations of the Commissioned operator account. The overall system provides an accessible and secure self-custody solution for blockchain operations, which is practical for real-world and every-day use cases.

Embodiments of the subject matter and the actions and operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, e.g., one or more modules of computer program instructions, encoded on a computer program carrier, for execution by, or to control the operation of, data processing apparatus. For example, a computer program carrier can include one or more computer-readable storage media that have instructions encoded or stored thereon. The carrier may be a tangible non-transitory computer-readable medium, such as a magnetic, magneto optical, or optical disk, a solid state drive, a random access memory (RAM), a read-only memory (ROM), or other types of media.

A computer program, which may also be referred to or described as a program, software, a software application, an agent, an app, a module, a software module, an engine, a script, or code, can be written in any form of programming language, including compiled or interpreted languages, or declarative or procedural languages; and it can be deployed in any form, including as a stand-alone program or as a module, component, engine, subroutine, or other unit suitable for executing in a computing environment. A computer program may, but need not, correspond to a file in a file system. A computer program can be stored in a portion of a file that holds other programs or data, e.g., one or more scripts stored in a markup language document, in a single file dedicated to the program in question.

Processors for execution of a computer program include, by way of example, both general- and special-purpose microprocessors, and any one or more processors of any kind of digital computer. Generally, a processor will receive the instructions of the computer program for execution as well as data from a non-transitory computer-readable medium coupled to the processor.

The term "device" often stands for "computing device", e.g. data processing apparatus, and encompasses all kinds of apparatuses, devices, and machines for processing data, including by way of example a programmable processor, a computer, or multiple processors or computers. Data processing apparatus can include special-purpose logic circuitry, e.g., an FPGA (field programmable gate array), an ASIC (application specific integrated circuit), or a GPU (graphics processing unit). The apparatus can also include, in addition to hardware, code that creates an execution environment for computer programs, e.g., code that constitutes processor firmware, a protocol stack, a database management system, an operating system, or a combination of one or more of them.

The processes and logic flows described in this specification can be performed by one or more computers or processors executing one or more computer programs to perform operations by operating on input data and generating output. The processes and logic flows can also be performed by special-purpose logic circuitry, e.g., an FPGA, an ASIC, or a GPU, or by a combination of special-purpose logic circuitry and one or more programmed computers. Computers suitable for the execution of a computer program can be based on general or special-purpose microprocessors or both, or any other kind of central processing unit.

Generally, a computer will also include, or be operatively coupled to receive data from or transfer data to one or more storage devices. The storage devices can be, for example, magnetic, magneto optical, or optical disks, solid state drives, or any other type of non-transitory, computer-readable media. However, a computer need not have such devices. Thus, a computer may be coupled to one or more storage devices, such as, one or more memories, that are local and/or remote.

Components can be "coupled to" each other by being commutatively such as electrically or optically connected to one another, either directly or via one or more intermediate components. Components can also be "coupled to" each other if one of the components is integrated into the other. For example, a storage component that is integrated into a processor (e.g., an L2 cache component) is "coupled to" the processor.

To provide for interaction with a user, embodiments of the subject matter described in this specification can be implemented on, or configured to communicate with, a computer having a display device, e.g., a LCD (liquid crystal display) monitor, for displaying information to the user, and an input device by which the user can provide input to the computer, e.g., a keyboard and a pointing device, e.g., a mouse, a trackball or touchpad. Other kinds of devices can be used to provide for interaction with a user as well; for example, feedback provided to the user can be any form of sensory feedback, e.g., visual feedback, auditory feed-back, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser, or by interacting with an app running on a user device, e.g., a smartphone or electronic tablet. Also, a computer can interact with a user by sending text messages or other forms of message to a personal device, e.g., a smartphone that is running a messaging application, and receiving responsive messages from the user in return.

While this specification contains many specific embodiment details, these should not be construed as limitations on the scope of what is being claimed, which is defined by the claims themselves, but rather as descriptions of features that may be specific to particular embodiments. Certain features that are described in this specification in the context of separate embodiments can also be realized in combination in a single embodiment. Conversely, various features that are described in the context of a single embodiments can also be realized in multiple embodiments separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and com-ponents in the embodiments described above should not be understood as requiring such separation in all embodiments, and it should be understood that the described program components and systems can generally be integrated together in a single software product or pack-aged into multiple software products.

While some embodiments have been described in detail, it is to be understood that aspects of the disclosure can take many forms. In particular, the claimed subject matter may be practiced or implemented differently from the examples described, and the described features and characteristics may be practiced or implemented in any combination. As one example, the processes depicted in the accompanying figures do not necessarily require the particular order shown, or sequential order, to achieve desirable results. In some cases, multitasking and parallel processing may be advantageous. The embodiments shown herein are intended to illustrate rather than to limit the invention as defined by the claims.

**Claims**

1. A computer-implemented method, the method comprising:

   providing a blockchain-based user account (150) for a user (140),
   wherein the user account (150) is associated with a first private key (116) for performing a user operation on a blockchain network (106), the first private key (116) maintained on a device (101) associated with the user (140), and
   wherein the user account (150) is further associated with a second private key (126) and a third private key (136) for collaboratively configuring one or more execution conditions (165) for the user operation, the second private key (126) maintained on a first device (101) and the third private key (136) maintained on a second device (102),
   wherein the first device (101) and the second device (102) are devices associated with the user (140).

2. The method of claim 1, wherein the device that maintains the first private key (116) is one of the first device (101) or the second device (102) or is a device (103) other than the first device (101) and the second device (102).

3. The method of claim 1 or 2, wherein the second private key (126) and third private key (136) are used to configure the one or more execution conditions (165) according to a proposal - approval scheme using the first device (101) and the second device (102).

4. The method of any of the preceding claims, wherein the user account (150) comprises an operator account (110) and the first private key (116) is associated with an operation manager (115) operating the operator account (110), the operation manager (115) executing on the device that maintains the first private key (116), wherein the method further comprises:

   obtaining (501), by the device that maintains the first private key (116), a user operation request (550) for the user operation;
   determining (503), by the operation manager (115), whether the one or more execution conditions (165) are met by the user operation requested in the user operation request (550);
   operating (505), by the operation manager (115), the operator account (110) to send the user operation request (550) signed using the first private key (116) to the blockchain network (106) when it is determined that the user operation meets the one or more execution conditions (165); and
   dismissing (507), by the operation manager (115), the user operation request (550) when it is determined that the user operation does not meet the one or more execution conditions (165).

5. The method of claim 4, wherein the one or more execution conditions (165) comprise at least one of:

   one or more execution conditions (165) defined by one or more resource receiver parameters,
   one or more execution conditions (165) defined by one or more resource transfer parameters, and/or
   one or more execution conditions (165) defined by one or more temporal parameters.

6. The method of claim 5, wherein the one or more resource receiver parameters comprise identification data of one or more authorized resource receivers, wherein, preferably, the identification data of the one or more authorized resource receivers are based at least in part on a list of authorized resource receivers provided by one or more trusted authorization providers and/or a user selection of at least some of the one or more authorized resource receivers.

7. The method of claim 5, wherein the one or more resource transfer parameters comprise a resource transfer limit defining an authorized maximum resource transfer amount for the user operation, wherein, preferably, the one or more execution conditions (165) defined by the one or more resource transfer parameters are met by the user operation when a resource transfer amount in the user operation is below or equal to the resource transfer limit.

8. The method of claim 5, wherein the one or more temporal parameters comprise a time-based resource flow limit defining an authorized maximum amount of resource transferable over a predefined time period.

9. The method of any of the preceding claims, further comprising providing an operation profile (160) associated with the user account (150) and configurable by the user (140) using collaboratively the second private key (126) and the third private key (136), wherein the operation profile (160) maintains the one or more execution conditions (165) for the user operation.

10. The method of claim 4, further comprising:

    receiving, by a validator node (105N) of the blockchain network (106), the user operation request (550);
    authenticating (509), by the validator node (105N), the user operation request (550) signed using the first private key (116);
    verifying (511), by the validator node (105N), that the one or more execution conditions (165) are met by the user operation;
    proceeding (513), by the validator node (105N), with expediting the user operation request (550) when the verification succeeds; and
    refusing (515), by the validator node (105N), the user operation request (550) when the verification fails and recording the refusal on the blockchain.

11. The method of claim 10, wherein the operator account (110) is a local operator account of the user account (150), the local operator account configured to operate on the blockchain network (106), wherein proceeding (513), by the validator node (105N), with expediting the user operation request (550) when the verification succeeds comprises:
    submitting and recording, by the validator node (105N), a blockchain transaction corresponding to the user operation on the blockchain of the blockchain network (106).

12. The method of claim 10, wherein the operator account (110) is a commissioned operator account (610) of the user account (150), the commissioned operator account (610) configured to operate on an external blockchain network (606) other than the blockchain network (106) and the user operation request (550) is a request for an external user operation (650) on the external blockchain network (606), wherein the first private key (116) and a fourth private key (616) are associated with the commissioned operator account (610), the fourth private key (616) operated by a trusted agent (615) on a secure environment (620), wherein the trusted agent (615) is configured to sign the external user operation (650) using the fourth private key (616) in collaboration with the operation manager (115) using the first private key (116) according to a dual-key signature scheme.

13. The method of claim 12, wherein proceeding (513, 700), by the validator node (105N), with expediting the user operation request (550) when the verification succeeds comprises:

    issuing (701), by the blockchain network, a signing instruction of the external user operation (650) to the trusted agent (615) for the trusted agent (615) to perform a first step of a dual-key signature on the external user operation (650) using the fourth private key (616) and obtain a partial-signature of the external user operation (650);
    receiving (703), by the blockchain network, the partial-signature of the external user operation (650) from the trusted agent (615) and recording, by the blockchain network, the partial-signature on the blockchain; and
    obtaining (705), by the operation manager (115), the partial-signature from the blockchain, performing, by the operation manager (115), a second step of the dual-key signature of the external user operation (650) using the partial-signature and the first private key (116) to obtain a dual-key signature and submitting the external user operation (650) with the dual-key signature to the external blockchain network (606) for processing.

14. A system comprising at least:

    a first device (101) associated with a user (140);
    a second device (102) associated with the user (140);
    the system configured to perform a method according to any of the preceding claims.

15. A computer-implemented method comprising:

receiving, by a validator node (105N) of a blockchain network (106), a user operation request (550) from an operation manager (115) executing on a device (101, 102) associated with a user (140) and that maintains a first private key (116), wherein the operation manager (115) is associated with a blockchain-based user account (150) for the user (140), the first private key (116) is a first private key (116) of the user account (150),

wherein the user operation request (550) is signed by the operation manager (115) using the first private key (116) and the user operation request (550) is a request for performing a user operation on the blockchain network (106),

wherein the user account (150) is further associated with a second private key (126) and a third private key (136) for collaboratively configuring one or more execution conditions (165) for the user operation, the second private key (126) maintained on a first device (101) and the third private key (136) maintained on a second device (102),

wherein the first device (101) and the second device (102) are devices associated with the user (140),

the method comprising:

    authenticating, by the validator node (105N), the user operation request (550); and

    processing, by the validator node (105N), the user operation request (550).

Fig. 1

200

```
┌─────────────────────────────────────────────────┐
│ Establishing a proposer agent on the first       │
│ device and establishing an approver agent on     │  201
│ the second device                                │
└─────────────────────────────────────────────────┘
                         │
                         ▼
┌─────────────────────────────────────────────────┐
│ submitting, by the proposer agent, an            │
│ administrator layer establishment request to     │  203
│ the blockchain network                           │
└─────────────────────────────────────────────────┘
                         │
                         ▼
┌─────────────────────────────────────────────────┐
│ recording, by the node, the administrator layer  │
│ establishment request as a candidate             │  205
│ administrator layer on the blockchain of the     │
│ blockchain network                               │
└─────────────────────────────────────────────────┘
                         │
                         ▼
┌─────────────────────────────────────────────────┐
│ receiving, by the second device, a message       │
│ about the candidate administrator layer from     │
│ the blockchain network and prompting the user    │  207
│ to verify and approve an establishment of the    │
│ candidate administrator layer                    │
└─────────────────────────────────────────────────┘
                         │
                         ▼
┌─────────────────────────────────────────────────┐
│ upon user approval, submitting, by the second    │
│ device, an approval of the establishment of the  │  209
│ candidate administrator layer to the blockchain  │
│ network                                          │
└─────────────────────────────────────────────────┘
                         │
                         ▼
┌─────────────────────────────────────────────────┐
│ establishing, by the node, the administrator     │
│ layer of the user account, and recording the     │  211
│ administrator layer on the blockchain            │
└─────────────────────────────────────────────────┘
```

Fig. 2

300

establishing an operation manager to operate the operator account on the first device, wherein the first private key is associated with the operation manager and a public key of the operation manager corresponds to a public key corresponding to the first private key — 310

submitting, by the proposer agent, an operation profile establishment request for the operator account to the blockchain network, the request including a specification of the operation profile — 320

recording, by the blockchain network, the operation profile establishment request as a candidate operation profile on the blockchain — 330

receiving, by the second device, a message about the candidate operation profile and prompting, by the second device, the user to verify and approve the candidate operation profile — 340

upon a user approval of the candidate operation profile received on the second device, sending, by the approval agent, an approval of the candidate operation profile to the blockchain network — 350

upon receipt of the approval of the candidate operation profile from the approval agent, establishing, by the blockchain network, the operation profile in the user account, the operation profile being associated with the operator account and recording the operation profile on the blockchain — 360

Fig. 3

400

| obtaining, by the first device and based on a user input, a configuration request of the one or more execution conditions | 401 |

submitting, by the proposer agent, the configuration proposal corresponding to the configuration request to the blockchain network, the configuration proposal being signed by the second private key — 403

authenticating, by the blockchain network, the configuration proposal and recording, by the blockchain network, the configuration proposal on the blockchain — 405

receiving, by the second device, a message about the configuration proposal as recorded on the blockchain and prompting, by the second device, the user to verify and approve the configuration proposal — 406

upon receipt of a user approval instruction of the configuration proposal on the second device, submitting, by the approver agent, the configuration approval of the configuration proposal signed by the third private key to the blockchain network — 407a

upon receipt of a user refusal instruction of the configuration proposal, submitting, by the approver agent, the configuration refusal of the configuration proposal signed by the third private key to the blockchain network — 407b

authenticating, by the blockchain network, the configuration approval or the configuration refusal received from the second device — 409

when the configuration approval is obtained from the second device, recording, by the blockchain network, a configuration of the one or more execution conditions corresponding to the configuration request on the blockchain — 411a

when the configuration refusal is obtained from the second device, refusing, by the blockchain network, the configuration request and recording the refusal on the blockchain — 411b

Fig. 4

At validator node:

509

511

yes → 513

no → 515

106

105N

550

115

116

505

yes

503 → no → 507

501

User device

Fig. 5

Secure environment 620

615
616

150

170
120
130

160
Condition 1
Condition 2
....

180
110
610

User device 101
125
126

115
116

User device 102
135
136

Backup copy
615
616

650

605
606

Fig. 6

700

issuing, by the blockchain network, a signing instruction of the external user operation to the trusted agent for the trusted agent to perform a first step of a dual-key signature on the external user operation using the fourth private key and obtain a partial-signature of the external user operation

701

receiving, by the blockchain network, the partial-signature of the external user operation from the trusted agent and recording, by the blockchain network, the partial-signature on the blockchain

703

obtaining, by the operation manager, the partial-signature from the blockchain, performing, by the operation manager, a second step of the dual-key signature of the external user operation using the partial-signature and the first private key to obtain a dual-key signature and submitting the external user operation with the dual-key signature to the external blockchain network for processing

705

Fig. 7

300a (part of 300)

establishing a blockchain account for a trusted agent, the blockchain account being associated with a fourth private key — 301

↓

obtaining, by the second device and via a secure connection, the fourth private key from the trusted agent, deriving a public key of the trusted agent, the public key of the trusted agent corresponding to a public key corresponding to the fourth private key, and providing, by the second device, the public key of the trusted agent to the first device — 303

↓

establishing an operation manager to operate the operator account on the first device, wherein the first private key is associated with the operation manager and a public key of the operation manager corresponds to a public key corresponding to the first private key — 310

↓

providing, by the first device, the public key of the operation manager to the second device — 311

↓

deriving, by the first device, a first version of a public key of the commissioned operator account based on the first private key and the public key of the trusted agent received from the second device — 313

↓

deriving, by the second device, a second version of the public key of the commissioned operator account based on the fourth private key and the public key of the operation manager received from the first device — 315

340

Receiving, by the second device, the message about the candidate operation profile, the message including the first version of the public key of the commissioned operator account — 341

350

comparing, by the second device, the first version of the public key of the commissioned operator account received in the approval request with the second version of the public key of the commissioned operator account and if they match, sending, by the approval agent, the approval of the candidate operation profile to the blockchain network — 351

Fig. 8

Europäisches
Patentamt

European
Patent Office

Office européen
des brevets

# EUROPEAN SEARCH REPORT

**Application Number**

EP 24 22 2318

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/383363 A1 (SMIRNOV ALEKSEY SERGEEVICH [RU]) 9 December 2021 (2021-12-09) * figures 1,3B * * paragraphs [0001], [0014], [0042], [0055] - [0056], [0060], [0064] - [0065], [0069], [0073], [0077] - [0083], [0098] * | 1-15 | INV. H04L9/00 H04L9/08 H04L9/32 H04L9/40 |
| X | US 2023/091686 A1 (NAKAIKE TAKUYA [JP] ET AL) 23 March 2023 (2023-03-23) * figure 1 * * paragraphs [0035] - [0051], [0062], [0075] * | 1-15 | |
| X | EP 3 852 335 A1 (ADVANCED NEW TECHNOLOGIES CO LTD [KY]) 21 July 2021 (2021-07-21) * paragraphs [0016], [0041] * | 1-15 | |
| A | LESAVRE LOÏC ET AL: "Blockchain networks : token design and management overview", NIST, NATIONAL INSTITUTE OF STANDARDS AND TECHNOLOGY (NIST) , 29 January 2024 (2024-01-29), pages 1-84, XP061092051, DOI: 10.6028/NIST.IR.8301 Retrieved from the Internet: URL:https://nvlpubs.nist.gov/nistpubs/ir/2 021/NIST.IR.8301.pdf [retrieved on 2024-02-08] * 3.1-3.3 * | 1-15 | **TECHNICAL FIELDS SEARCHED (IPC)** H04L |

The present search report has been drawn up for all claims

| Place of search | Date of completion of the search | Examiner |
|---|---|---|
| Munich | 17 April 2025 | Kufer, Léna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 2318

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2025

| Patent document cited in search report | Publication date | Patent family member(s) | | Publication date |
|---|---|---|---|---|
| US 2021383363 A1 | 09-12-2021 | US | 2021383363 A1 | 09-12-2021 |
| | | WO | 2020162780 A1 | 13-08-2020 |
| US 2023091686 A1 | 23-03-2023 | US | 2023091686 A1 | 23-03-2023 |
| | | WO | 2023046409 A1 | 30-03-2023 |
| EP 3852335 A1 | 21-07-2021 | CN | 110011978 A | 12-07-2019 |
| | | EP | 3852335 A1 | 21-07-2021 |
| | | SG | 11202104063S A | 28-05-2021 |
| | | TW | 202034665 A | 16-09-2020 |
| | | US | 2021250169 A1 | 12-08-2021 |
| | | WO | 2020181937 A1 | 17-09-2020 |

EPO FORM P0459

For more details about this annex : see Official Journal of the European Patent Office, No. 12/82